(19) Europäisches Patentamt
European Patent Office
Office européen des brevets

(11) Publication number: **0 075 627**
**B1**

(12) **EUROPEAN PATENT SPECIFICATION**

(45) Date of publication of patent specification: **28.12.88**

(51) Int. Cl.$^4$: **G 01 S 13/30,** G 01 S 7/28, G 01 S 7/52, G 01 S 1/02, G 01 S 15/58

(21) Application number: **81304504.4**

(22) Date of filing: **29.09.81**

(54) **Navigational systems using phase encoded angular coordinates.**

(43) Date of publication of application:
**06.04.83 Bulletin 83/14**

(45) Publication of the grant of the patent:
**28.12.88 Bulletin 88/52**

(84) Designated Contracting States:
**BE DE FR GB NL**

(56) References cited:
**US-A-4 028 699**
**US-A-4 114 153**
**JOURNAL OF THE INSTITUTE OF NAVIGATION, Vol. 24, No. 1, January 1971 K.E. KARWATH "Area Navigation and the Associated Display Methods" pages 105 to 120**
**OPTICAL ENGINEERING, Vol. 15, No. 4, July/August 1976, Bellingham A.S. MARATHAY "Polarization States" pages SR 80, 81**

(73) Proprietor: **Neidell, Norman S.**
**908 Town and Country Boulevard**
**Houston Texas 77024 (US)**

(72) Inventor: **Neidell, Norman S.**
**908 Town and Country Boulevard**
**Houston Texas 77024 (US)**

(74) Representative: **Boon, Graham Anthony et al**
**Elkington and Fife High Holborn House 52/54**
**High Holborn**
**London, WC1V 6SH (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 075 627 B1

## Description

This invention generally relates to navigation systems which seek to position in real time with appropriate accuracy one or more mobile platforms in reference to a known system of coordinates by the emission of signals into a propagation medium and processing them after detection.

According to Karwarth in the Journal of the Institute of Navigation, Vol. 24, No. 1, pp. 105—120, January 1, 1971, the basic objective of area navigation is to position in real time with appropriate accuracy one or more mobile units with reference to some known coordinate system. The number of coordinates needed depends upon whether the course of the mobile unit can be charted on a known surface or must be described in three-dimensional space as in the respective cases of a ship at sea and an aircraft. The ability to chart a course based on past, present and future desired positions is a principal element in distinguishing an area navigation system from navigation using point-to-point or "homing" approaches such as VOR/DME (VHF Omnidirectional Range/Distance Measuring Equipment).

Positions are established in all cases by signal transmission between the mobile units and at least one transmitter of known location. The transmissions can be electromagnetic (including optical) or acoustic in any medium including air. Two basic methods are normally used to obtain positions, that is to say, positions may be determined from a sufficient number of range measurements to known reference locations by using what is commonly known as "range-range" systems, or positions may be determined from a sufficient number of range differences to known locations, by using what is commonly known as "hyperbolic" systems. In each case a sufficient number is at least equal to the number of coordinate values needed.

Direct ranging involves calculation of intersections of the circles or spheres of uniform range from each reference location to the mobile unit. By contrast, the locus of equal range difference from the mobile unit to a pair of reference locations are hyperbolae or hyperbolae of revolution. Again, positions are calculated by intersection of curves or surfaces, but in this case related to hyperbolae, hence the name hyperbolic systems.

An exemplary task of area navigation might be the positioning of a ship at near shore distances. In range-range operation only two shore stations are needed while a hyperbolic system requires three. Three shore stations admit calculation of three range differences hence providing some element of data redundancy. As a general rule, hyperbolic systems offset a disadvantage in requiring one more known reference location than the simplest operable ranging system by having some degree of data redundancy.

As for the transmitted signals, a variety of differing modes of operation are possible. Ranges can be determined from signal transmission time between the mobile unit and a reference location if the signal initiation time is known, a time standard is available, and a signal propagation velocity is also known. The simplest means for establishing known initiation times is to transmit signals only in response to some interrogation. Alternatively, if transmissions are synchronized to occur at regular time intervals, time differences are readily determined with no interrogation step needed using only a local time standard and a propagation velocity.

Again, signal transmissions themselves can consist of continuous waveforms (typically sinusoids), intervals of continuous signal transmissions, or sequences of pulses. The choice of transmitted signal reflects consideration of the information desired, mode of operation (range-range versus hyperbolic), noise effects, and the extent of Doppler distortions amongst other factors.

Continuous waveforms are the most robust signals in the presence of noise backgrounds since correlation-type receivers may take advantage of the extreme signal duration. Such signals have no resolution in time and are used principally with hyperbolic systems to establish time-differences by making phase comparisons with reference signals. Where the transmitter-receiver relative velocity is not insignificant in proportion to the signal propagation velocity, Doppler effects shift the frequencies of continuous waveforms. Frequency shifts may be viewed as errors since they distort subsequent correlation steps and thus degrade phase comparisons, however, if such shifts are measured, they do relate to velocity information should this be desired.

Use of continuous signals over intervals provides time resolution as well as opportunities for correlation detection, but over shorter data windows. Again, any Doppler effects may be viewed either as constituting an error in range determination or if measured, velocity information. The tolerance of such signals to noise effects is of course diminished in direct proportion to their shortened duration.

In the limit, as duration is shortened, pulsed signals must be considered which when taken individually offer no opportunity to measure Doppler effects. Hence significant transmitter-receiver relative velocities will be noted as range errors for such systems. These signals are also most affected by the presence of noise, but afford the greatest resolution in making a direct time measurement. It follows that the alternative methods of operations which exist constitute attempts at optimizing a number of trade-offs which interact with some complexity. The hardware requirements, operation costs, efficiencies and effectiveness in terms of achievable accuracy are all essential ingredients which play roles in the optimization.

This invention relates to navigation systems which employ phase encoded angular coordinate information in transmitted signals. The technology for this invention can conveniently employ the methods described in US—A—4114153.

According to the invention there is provided a method of ascertaining for a mobile unit, navigational information in terms of at least one angular coordinate, comprising transmitting from a transmitter to a receiver one of which is located on the mobile unit and the other of which is located on a fixed unit, a component signal which consists of at least one member signal which is a linear combination of a pair of base signals $f_0(t)$ and $f_1(t)$ which satisfy the following properties to the practical approximation required:

(i) $f_0(t)$ and $f_1(t)$ share a common amplitude spectrum which is substantially flat over both its continuous bands at positive and negative frequencies and is substantially zero elsewhere;

(ii) there is a finite time interval of duration $\alpha$ before and after which both $f_0(t)$ and $f_1(t)$ may be considered to be zero;

(iii) $f_0(t)$ and $f_1(t)$ are in quadrature; and

(iv) $f_0(t)$ and $f_1(t)$ are transformable to odd and even functions respectively about $t=0$, defined as the central coordinate value in their interval of definition of duration $\alpha$, by a constant phase shift applied to all frequencies, the or each member signal being phase encoded with a distinction in phase with respect to said at least one angular coordinate;

receiving said component signal at said receiver;

measuring phase for the received signal; and

decoding said at least one angular coordinate from said measured phase.

The method of the invention may additionally ascertain further navigational information in terms of radial ranges and/or relative velocity between the mobile unit and the transmitter.

Referring now briefly to the invention and embodiments thereof, the component signals which may be concurrently propagating are always separable and distinguishable from one another by some combination of frequency content, polarization character, and member signal pattern. Member signals are required to have four basic properties.

Broad beam transmitters produce the component signals which illuminate the navigation area. Broad beam receivers detect these signals. Angular coordinate information is phase encoded in member signals by reflective or transmissive mechanisms. All encodings can be substantially characterized by a phase distortion consisting of a constant and a second complementary constant which multiplies the frequency. This approximation produces the first two terms of a Taylor series developed over frequency, the independent variable.

Angular coordinates are referred either to receiver or transmitter locations, and either the receiver or the transmitter can constitute the known location, depending on the particular embodiment. Component signal transmissions can be sent in response to interrogation, at regular time intervals or at random, depending on the selected mode of operation. In all cases the angular coordinate information will be conveyed.

Processing the received component signal to identify member signals may be described by a phase-invariant quadrature matched-filtering operation which is described in US Patent No. 4,114,153. Member signal basic properties and such processing of the received component signals are complementary in that frqeuency shifts resulting from relative motion between the transmitter and receiver do not affect arrival time measurements nor the phase encoded angular coordinate information.

Relative velocity component information between mobile units and the known location and radial range information may also be conveyed by the component signals. Such determinations are possible if the initial interval time between member signals, the time of member signal transmission, the signal propagation velocity, and a time standard are known. Having both range and angular coordinate information allows development of a navigation system which can operate using only a single base station.

Since utilization of phase information is the essence of the invention, several corrections to compensate for phase distortions are included. Distortions accompanying member signal design and entering during processing are some which fall in this category.

The broad beam nature of the transmitters used in this invention suggests lower signal energy levels than might be achieved with a narrow beam system. Rapid repetition of these broad beam signals can however overcome this deficit. Further, the ability to impart angular coordinate information offers opportunities to overcome the ambiguities of skywave reflections in electromagnetic embodiments and multipath reflections in sonar applications.

Advanced embodiments of the invention can allow initial mobile units to position other mobile units with respect to themselves once the units have established their locations. The initial mobile units accomplish this function by using echoes or reflections from the other mobile units and function in this case as an echo-location system which is described in U.S. Patent No. 4,114,153.

Finally, by encoding sufficient redundancy in the member signals, any phase distortions imparted by the propagation medium may be measured as a part of the decoding operation. This feature adds significantly to the robustness of the method of this invention. Such distortions are illustrated with previously unpublished results. The phase distortion for sound waves caused by propagation in water for frequencies in the vicinity of 1.2 Mhz is characterized as a function of the propagation path length by the methods of this invention.

In the accompanying drawings:

Figure 1 shows the time and frequency domain properties of a design base signal pair having respectively odd and even symmetry;

Figure 2 shows a generalized embodiment of the invention having a single transmitter and receiver;

Figure 3 shows a processing sequence for the embodiment of Figure 2;

Figure 4 shows the operations of the navigational information estimator of Figure 3;

Figure 5 shows an elementary electromagnetic area navigation system having a single base station;

Figure 6 shows binary encoded member signals at known intervals for establishing time references;

Figure 7 shows an experimental apparatus used to characterize the phase distortion caused by the dispersive properties of water at 1.2 Mhz;

Figures 8 and 8a show digitized received member signals for the apparatus of Figure 7, after transmission through water, and their frequency analyses; and

Figure 9 shows experimental results indicating the relationship of the phase distortion of member signals at 1.2 Mhz with their propagation distance through water.

Figure 1 shows a pair of base signals from which a member signal may be designed. A single member is formed as a linear combination of a pair of base signals as defined in U.S. Patent No. 4,114,153. In mathematical terms we shall call this signal

$$f(t)=m\,f_0(t)+n\,f_1(t), \qquad (1)$$

where m and n are constants obeying the relationship $m^2+n^2=1$, and $f_0(t)$, $f_1(t)$ represent the base signals.

The four requisite properties I—IV of the base signals $f_0(t)$ and $f_1(t)$ are:

I. $f_0(t)$ and $f_1(t)$ share the common amplitude spectrum F(w) which is substantially flat over both its continuous bands at positive and negative frequencies and is essentially zero elsewhere.

II. There is a finite time interval of duration α, before and after which both $f_0(t)$ and $f_1(t)$ may be considered to be zero, or $f_0(t)$ and $f_1(t)$ are pulses.

III. $f_0(t)$ and $f_1(t)$ are in quadrature or constitute a Hilbert transform pair. In other words, at each common frequency component the signals differ in phase by 90°.

IV. $f_0(t)$ and $f_1(t)$ must be transformable to odd and even functions respectively about t=0, defined as the central coordinate value in their interval of definition of duration α, by a constant phase shift applied to all frequencies.

Signals termed Klauder signals and Gabor signals described in U.S. Patent No. 4,114,153 are in fact two representative types of signals appropriate for use as the base signals $f_0(t)$ and $f_1(t)$. Mathematically these signal types are defined as:

Klauder Signals $k_0(t)$, $k_1(t)$ (2A)

$$k_0(t)=A\frac{\cos w_f t-\cos w_0 t}{(w_f-w_0)t}$$

$$k_1(t)=A\frac{\sin w_f t-\sin w_0 t}{(w_f-w_0)t}$$

$w_0$, $w_f$ and A are constants, and $k_0(t)=k_1(t)=0$ for $t\geqq a/2$.

Gabor Signals $g_0(t)$, $g_1(t)$ (2B)

$$g_0(t)=A\frac{\frac{t}{t_0}}{1+\left(\frac{t}{t_0}\right)^2}$$

$$g_1(t)=A\frac{1}{1+\left(\frac{t}{t_0}\right)^2}$$

$t_0$ and A are constants, and

$g_0(t)=g_1(t)=0$ for $t\geqq \alpha/2$.

Returning now to Figure 1 (which corresponds to Figure 12 of U.S. Patent No. 4,114,153. It shows a diagram of the time domain and Fourier frequency domain properties of the Klauder base signal pair termed $f_0(t)$, $f_1(t)$ (refer to Equation 2(A)) which illustrate the four requisite properties (I through IV) for base signals.

Figure 2 shows a generalized embodiment of the invention which employs a single transmitter 1 and receiver 3. The transmitter 1 produces at least one component signal 1A. A component signal is a train of member signals which is always separable and distinguishable from other component signals by some combination of frequency content, polarization character and member signal pattern. In cases such as for sonar signals where the polarization character is alike for all signals, the polarization character drops out as a possible distinguishing feature. A discussion on polarization character or state is presented by A. S. Marathay in Optical Engineering, Vol. 15, No. 4, p. SR 80—81, July—August, 1976.

For the navigation system of Figure 2, it is required that a transmitted component signal 1A be received directly, but that somewhere along the propagation path a mechanism interacting with the signal phase be encountered. Such an element can be a phase lens or phase encoding mechanism. Element 2 performs this function. The component signal 1A which propagates with known velocity encounters the phase encoding mechanism 2 and is subsequently received by the receiver 3. The received component signal 3A is forwarded to the processing sequencer 4 and processing outputs are sent on to the navigational information estimator 5.

The role of the phase encoding mechanism 2 is to encode in each member signal information about one or more angular coordinates as a phase distortion. Also, the phase distortion for each angular coordinate must be unambiguously related to that coordinate. Further, the phase distortion over the applicable frequency band must be representable in good approximation by:

$$G(w)=\theta_0+\theta_1 w \quad (3)$$

where,

$\theta_0$ is a constant phase,

$\theta_1$ is a complementary constant multiplying the angular frequency w.

The code for the angular coordinate is contained in the explicit relation between the coordinate and G(w).

Property I as given earlier for the underlying base signals must be substantially retained even after the action of the phase encoding mechanism 2. Equation (3) should also be recognized as the first two terms of a Taylor series expansion. Hence the character of this approximation is based upon development of the received member signal phase spectrum as a Taylor series with truncation of the series after the second term. For the $i^{th}$ member signal of a component signal, the following notation will be used:

$\theta_{i0}+\theta_{i1}w$ to approximate the measured phase.

Phase encoding mechanisms of the type desired may be reflective in nature as well as transmissive. A simple reflective encoding mechanism which is described exactly by equation (3) is well known. If the transmitted signal is reflected for some range of angles which are all beyond the critical angle for the particular reflective surface, a frequency independent phase encoding $\theta_{i0}$ is imposed which will vary with the particular incidence angle. For this case $\theta_{i1}$ will be identically zero for all of the allowable incidence angles. See the discussion "3-2: Reflection of a Pulse Incident Beyond the Critical Angle" commencing on page 90 of Ewing, Jardetzky, and Press, *Elastic Waves in Layered Media*, Lamont Geological Observatory contribution No. 189, McGraw-Hill, 1957 and also the work of Arons and Yennie, J. Acoust. Soc. Amer., Vol. 22, pp. 231—237, 1950 for lucid accounts of this phenomenon.

The navigational information for the generalized embodiment of Figure 2 can be recovered by processing the received signal 3A through the processing sequencer 4 which is shown in detail in Figure 3. In Figure 3 each member signal of the pattern within each component signal must be identified and timed. The mathematical analysis of the operational sequence is given in U.S. Patent No. 4,114,153. Such analysis describes how basic properties I through IV enable individual member signals to be identified and correctly retain arrival time and phase encoded angular coordinate information in spite of appreciable distortions which may be present owing to relative motion between the transmitter and receiver. Also, a phase-invariant quadrature matched-filter processing sequencer employing analogously design signals was described by Speiser and Whitehouse at a symposium on Spread Spectrum Communications held at the Naval Electronics Laboratory Center, San Diego, March 13—16, 1973.

Member signals are identified for each of the significant peaks detected by element 4F. Arrival times can be computed for each member signal with the use of a time standard, however, signal transmission times only can be determined if the signal initiation times are known. The phases of the member signals can be computed using the alternatives cited as elements 4G1 and 4G2. If the method using arctangents of ratios of element 4G1 is elected, then if more than a single member signal is involved, these must be in quadrature. Again, the applicable analysis is given in U.S. Patent No. 4,114,153.

The navigational information estimator 5 of Figures 2 and 3 is outlined in detail in Figure 4. In both Figures 3 and 4, a subscript, or the first subscript of a doubly subscripted quantity refers to the number of an individual member signal of the pattern within a component signal. Processing sequencer outputs 5A are both arrival times $t_i$ for the member signals and phase functions. Since the two term Taylor series expansion will be taken to approximate the phase functions, these quantities will consist of either the constant terms $\theta_{i0}$ if the calculation of 4G1 is used, or both $\theta_{i0}$ and $\theta_{i1}$, if the alternative 4G2 is selected. The constants are complementary in that should the $\theta_{i1}$ not be determined as in the calculation of 4G1, they will nevertheless be known by prior measurement or theoretical calculation and so can be supplied by alternate means should this be required.

Elements 5C of Figure 4 calculates member signal interval times. If these interval times 5B1 are initially known, then in conjunction with the signal propagation velocity V 5B5, radial relative velocity components can be calculated according to element 5D. Signal transmission times can be computed from the member signal arrival times $t_i$ as in element 5E if member signal initiation times 5B2 are known. Such transmission time is corrected as indicated for phase terms linearly varying with frequency (elements 5B3, 5B4). Amongst such correction terms would be $\theta_{i1}$ which are either measured or complementary known terms as previously discussed, and any linear phase terms of the encodings.

Radial Range estimates between transmitter and receiver can be made according to element 5F using any computed signal transmission times $T_i$ (from element 5E) and the signal propagation velocity. Provision is made in 5F for any known radial velocity component as may have been previously determined by element 5D.

The decoding of the angular coordinates of element 5G is relatively straightforward. First one corrects the measured constant phase for any constants introduced by the base signals (element 5B7). Such constants might result from the use of a pair of base signals rotated in phase by a constant $\chi$ from base signals as defined having symmetry and antisymmetry properties, respectively (Property IV). Also, the base signals used in the processing sequencer 4 may contribute constant phase modifications to the measured member signal measured phases.

If a single angular coordinate is encoded in each member signal, we need only associate the measured phase with the angular coordinate via the known code. Where more than one angular coordinate is encoded in each member signal, a somewhat more complex, but simultaneous, decoding scheme must be employed as described in the echo location embodiment shown in Figure 7 of U.S. Patent No. 4,114,153. In this case at least one angular coordinate must be encoded differently in different member signals. Also, the codes used must be independent and at least sufficient in number to permit a simultaneous solution for the angular coordinates. If there are redundant codes, a least squares solution can be applied.

Since the case of more than one encoded angular coordinate may be difficult to visualize, the following exemplary circumstances may be considered. Assume that for two member signals which constitute a component signal, the measured constant phases $\theta_{00}$ and $\theta_{10}$ are determined. The two angular coordinates which are encoded are $\phi_0$ and $\phi_1$.

The constant phase encoding for $\phi_0$ will be taken as $\phi_0/h_0$ for both member signals, where $h_0$ is taken as a known constant. For $\phi_1$ on the other hand, the encoding will be $\phi_1/h_1$ for the first member signal and $\phi_1/h_2$ for the second one, where $h_1$ and $h_2$ are known constants.

Now, the measurements $\theta_{00}$ and $\theta_{10}$ may be related to $\phi_0$ $\phi_1$, by the simply developed set of equations:

$$\theta_{00}=\frac{\phi_0}{h_0}+\frac{\phi_1}{h_1}$$

$$\theta_{10}=\frac{\phi_0}{h_0}+\frac{\phi_1}{h_2} \qquad (4)$$

Simultaneous solution of equations (4) gives:

$$\phi_0=\frac{h_0h_1\theta_{00}-h_0h_2\theta_{10}}{h_1-h_2}$$

$$\phi_1=\frac{h_1h_2(\theta_{10}-\theta_{00})}{h_1-h_2} \qquad (5)$$

which is the desired simultaneous decoding.

The embodiment of Figure 2 was termed generalized for a variety of reasons. First, it was not stated whether the receiver or the transmitter was at the known location. Clearly, a navigation application requires that one of these be known. Next, it was not stated whether the component signal was sent off in response to interrogation or at regular intervals. Further, it is implied that the same or other transmitters can produce other component signals concurrently, and that these can be received and processed in analogous manner to give still other estimates of navigational information.

Since viable navigation systems of this type (as described by Figure 2) may operate according to any or all of the possibilities cited above according to the principles already set forth, a more concrete illustration of one alternative will help in the visualization of the most general concept.

Figure 5 shows an elementary area navigation system NS having a single base station BS at a known location. Receivers 3 onboard mobile platforms MP will be able to establish bearing angle $\phi$, radial range, and radial velocity with respect to this base station.

The phase encoding of the bearing angle $\phi$ is established by reflective means 2, the critical angle for the particular reflective material being $\beta_c$. A broad band source 1′ of pulsed electromagnetic radiation is required. Such a source might be designed employing principles analogous to the Travitron developed by Ikor, Inc., of Burlington, Massachusetts, which was reported in the New Scientist, p. 285, August 6, 1970.

Source 1′ sends binary encoded pulse trains of member signals which repeat on a five minute clock cycle that is precisely controlled. The pulse sequences are sent at five second intervals according to the code shown in Figure 6. Note that the time of member signal initiation can be determined by simple recognition of the binary code. If a mobile platform remains stationary for several intervals at a known location, sufficient information will be received to calibrate a relatively low quality (and correspondingly inexpensive) time standard. With such a calibration achieved, the member signal initiation times are subsequently known.

Each of the component signal trains consists of no less than two member signals, and each signal is of a nature previously described (Properties I through IV). An appropriate frequency band in the case of electromagnetic near shore navigation might be 100—500 Mhz.

The system shown in Figures 5 and 6 thus requires no interrogation of the transmitter and can provide redundant navigational information by the conventional range-range approach, should there be additional base stations. We can further recognize from this exemplary case all of the essentials of the generalized embodiment of Figure 2. The processing sequencer of Figure 3 and the navigational information estimator of Figure 4 are both specifically applicable.

Alternative implementations of the generalized embodiment using transmitter interrogations, or having known receiver locations and mobile transmitters, or employing only the encoding of angular coordinates will become readily apparent to those skilled in the art.

Again, it is important to emphasize the methods employing phase encoded angular coordinates may be used with conventional approaches such as the range-range operation, where more than one range determination may be made, and that standard statistical procedures for combining and upgrading the accuracy of redundant measurements may be employed.

It is useful at this point to relate features of the present invention to the considerations presented in the background for the invention. First, although member signals are pulse-like, they still are of sufficient duration to benefit from correlation detection, but also to suffer from Doppler distortions. Hence, a phase invariant correlation and detection scheme which complements the signal design is employed. If velocity information is desired more than one member signal is required. While sequences of member signals provide good redundancy and signal-to-noise ratio advantage, their very duration limits the ability to resolve changes in the relative velocity.

The defined class of signals have a remarkable ability to bear angular coordinate information as a distortion-resistant phase encoding. Several important practical advantages accrue to this invention owing to this ability and two particularly sophisticated extensions of the basic generalized embodiment of Figure 2 will be given below.

Certain practical matters should be first taken into consideration. A rather standard approach to developing angular coordinate information is to scan in the sense of the angular coordinate with a narrow beam transmitter, as in the case of a conventional radar system. Use of the narrow signal beam allows great concentration of signal energy which has ensuing advantages in noisy environments. On the negative side however, the time duration of the scanning cycle may have portions of the navigation area without signal coverage for unacceptable time periods.

The system of my invention is omnidirectional or at least broad beam by nature. Any diminution of signal level accompanying this feature may be overcome by frequent repetition of the signal patterns over time and the development of statistical models relating the information from one time to the next. In fact, the work of R. E. Kalman as reported in the Journal of Basic Engineering (ASME Transactions), Vol. 82, Pages 35—45, 1960, and the subsequent work on Kalman filters by others offers an ideal analytical vehicle to update the navigation information display 5H of Figure 4. My navigation system described herein would at no time leave the navigation area without signal coverage for any significant time period.

Also, the ability to label the signal transmission paths with angular coordinates will solve an important problem occurring in long range navigation systems using both electromagnetic and acoustic signals. For electromagnetic signals the skywave or ionospheric reflection sometimes may not be readily distinguished from directly transmitted signals. Submarine navigation systems similarly have multipath signal arrivals caused by reflections from the acoustic impedance layering of the sea, which again may not be conveniently distinguishable from direct transmission paths. If the direct signal paths could be distinguished from secondary paths in terms of an angular coordinate, then a new basis for identification of the direct signal is developed.

It follows from the ability to label signal transmission paths with angular coordinates, that a mobile unit such as shown in Figure 5, once positioned, may position other mobile units relative to itself from their reflected signals or echoes. The transmitter and mobile unit carrying the receiver being at known locations constitute an echo location system.

Finally, one must consider the possibility that phase distortions may be impressed into the member signals by properties of the signal propagation medium itself. The presence of such distortions may not necessarily be anticipated or even recognized.

An excellent case in point involves the use of water as a propagation medium for acoustic signals centered around the frequency 1.2 Mhz. Such transmissions are often used as small scale simulations of radar and microwave systems.

The following experimental study using the techniques of this invention documents and measures the hitherto undetected phase distortion or dispersive property of water at the cited frequency.

In this study, the constant phase term, which will be taken to characterize the phase effect of water as a dispersive transmission medium, was sought for the frequency band 0.95—1.45 Mhz (roughly centered about 1.2 Mhz). For the range of water transmission paths between 2 and 7 cm in length, the constant phase distortion was estimated to be 16.7°/cm. Figures 7, 8, 8a and 9 describe this particular study.

Figure 7 shows a schematic arrangement of the apparatus. A Datapulse 101 signal generator 1" was used to drive a transmitting transducer 1B which sends a narrow acoustic beam to a receiving transducer 3 through water W in an immersed open glass tube G. Signal generator 1" and transducer 3 were crystals having circular faces 1.905 cm in diameter, while the glass tube inner diameter measured 3.175 cm. Received waveforms were recorded on Polaroid photographs from a Tektronix type 561A oscilloscope 3A. The waveforms were subsequently digitized at a sample interval of .122 µsec using a Wang calculator with an interfaced digitizer. The transmitted waveform was in the nature of a member signal.

Figure 8 shows plots of the digitized received member signal waveforms for propagation distances from 0 to 10 cm through the water. Owing to the physical size of the transducer, only distances beyond 1.5 cm become representative of the far field signal transmissions. Also, owing to the transducer beam width, results beyond 7.5 cm may be expected to show tube sidewall interference effects.

In Figures 8 and 8a, amplitude and phase spectra are also shown for the received member signals. The origins for the phase spectral calculations are the time samples at or just before the member signal origins as would be determined following the processing sequence of Figure 3. In this case, the correlation operations 4C1, 4C2 of Figure 2 are performed with a Klauder signal base pair occupying the frequency band of 0.89 to 1.48 Mhz and the origins selected are based on the peak times identified by element 4F. Hence the phase spectra and the identification of characteristic constants over the significant frequency band represent the operations of element 4G2. The simple behavior of the phase spectra over the significant frequencies which results from appropriate choice of the member signal origins will be appreciated.

In Figure 9 the detected constant phases as calculated from the phase spectra over the band of significant frequencies (Figure 8 and element 4G2 of Figure 3) are plotted against the propagation distance, as are the constant phases computed according to element 4G1 of Figure 3. The two calculations produce remarkably similar results, which imply a simple linear relationship between the constant phase distortion (imparted by the water) and the propagation path length. As stated earlier, the slope of this relationship is estimated to be 16.7°/cm of travel.

Hence, if signal phase distortions are present in the propagation medium, as described, the following description will provide an embodiment for a navigation system which can measure such distortions and correct for them accordingly. The essentials for this embodiment have much in common with the method employed to encode more than one angular coordinate in a component signal.

For this embodiment the phase distortions imparted by the medium are treated as one additional encoded angular coordinate. If sufficient redundancy is designed into the component signal, and a sufficient number of the encodings including the medium phase distortion are mathematically independent, then the medium phase distortion will be developed as a part of the same simultaneous calculation for the angular coordinates. A specific illustration will help clarify this general concept.

Assume that two member signals constitute the particular component signal, and that the measured constant phases after processing according to Figure 3 are $\theta_{00}$ and $\theta_{10}$. The single angular coordinate $\phi_0$ is phase encoded as $\phi_0/h_0$ in the first member signal and as $\phi_0/h_1$ in the second one. A medium induced phase distortion $\phi_m$ is present in both member signals which have travelled over the same path.

The following equations relate the measurements $\theta_{00}$ and $\theta_{10}$ to the desired quantities $\phi_0$ and $\phi_m$:

$$\theta_{00}=\frac{\phi_0}{h_0}+\phi m$$

$$\theta_{10}=\frac{\phi_0}{h_1}+\phi m \qquad (6)$$

Solving equations (6) gives:

$$\phi_0=\frac{h_0h_1(\theta_{00}-\theta_{10})}{h_1-h_0}$$

$$\phi_m=\frac{h_1\theta_{10}-h_0\theta_{00}}{h_1-h_0} \qquad (7)$$

If $\phi_m$ is calculated for many ranges, the phase distortion of the medium can be rather simply characterized. Alternatively, if $\phi_m$ is believed to relate to the range in a functionally known manner and range estimates are available, then the decoding equations can be reformulated to directly estimate the parameters of the functional relationship.

In sum, navigation systems which embody elements of the invention described herein offer several novel and highly desirable and useful alternatives for addressing the compromises which inevitably must be faced in developing area navigation systems.

**Claims**

1. A method of ascertaining for a mobile unit, navigational information in terms of at least one angular coordinate, comprising:

transmitting from a transmitter to a receiver one of which is located on the mobile unit and the other of which is located on a fixed unit, a component signal which consists of at least one member signal which is a linear combination of a pair of base signals $f_0(t)$ and $f_1(t)$ which satisfy the following properties to the practical approximation required:

(i) $f_0(t)$ and $f_1(t)$ share a common amplitude spectrum which is substantially flat over both its continuous bands at positive and negative frequencies and is substantially zero elsewhere;

(ii) there is a finite time interval of duration α before and after which both $f_0(t)$ and $f_1(t)$ may be considered to be zero;

(iii) $f_0(t)$ and $f_1(t)$ are in quadrature; and

(iv) $f_0(t)$ and $f_1(t)$ are transformable to odd and even functions respectively about t=0, defined as the central coordinate value in their interval of definition of duration α, by a constant phase shift applied to all frequencies, the or each member signal being phase encoded with a distinction in phase with respect to said at least one angular coordinate;

receiving said component signal at said receiver;

measuring phase for the received signal; and

decoding said at least one angular coordinate from said measured phase.

2. A method according to claim 1, wherein a plurality of angular coordinates are encoded in a corresponding plurality of said member signals.

3. A method according to Claim 1, wherein the transmitted signal is a component signal formed of a plurality of said member signals.

4. A method according to Claim 3, wherein said member signal is transmitted in a medium of known propagation velocity and wherein further navigational information is ascertained in terms of the relative velocity between the transmitter and receiver, the method comprising the further steps of measuring interval times between member signals whose interval time is initially known, forming corrected interval times by compensating each so formed time for any linear elements in said phase encodings, and determining said relative velocity from said corrected interval times.

5. A method according to Claim 3 or 4, wherein said member signal is transmitted in a medium of known propagation velocity and wherein further navigational information is ascertained in terms of the radial range between the transmitter and receiver, the method comprising the further steps of measuring signal transit times for member signals having a known time of initiation, forming corrected measured signal transit times by compensating each so formed time for any linear elements in said phase encodings, producing said radial range from said corrected signal transit times, and correcting said radial range for any known relative velocity components.

6. A method according to any preceding claim, wherein a phase distortion produced by properties of the signal propagation medium is present in each member signal, the medium phase distortion being independent of all other phase encodings, the number of independent encodings being at least equal to one more than said number of angular coordinates, and said medium phase distortions are obtained from said measured phases and said known phase encodings.

7. A method according to any preceding Claim, wherein for at least one mobile unit which has established its location from said navigation information, reflected member signals from other mobile units are used to establish their positions in relation to said mobile unit of established location.

8. A method according to any preceding Claim, wherein phases are measured from identified member signal phase spectra.

9. A method according to any preceding Claim, wherein said at least one angular coordinate is encoded as a phase distortion introduced by propagating the transmitted component signal through a medium having dispersive properties which vary in relation to the said at least one angular coordinate.

10. A method according to any one of Claims 1 to 8, wherein said at least one angular coordinate is encoded as a phase distortion introduced by reflecting the transmitted component signal from a surface positioned beyond the critical angle in relation to the said at least one angular coordinate.

11. A method according to any preceding Claim, wherein a plurality of said component signals are transmitted, the component signals being separable from one another.

12. A method according to claim 11, wherein each component signal has defined polarization character, the component signals being distinguishable from one another by some combination polarization character, frequency content and member signal content, the method comprising the steps of

separating received component signals and forming replicas for processing,

processing said replicas by cross-correlating with detection base signal pairs, thereby producing a pair of correlation component functions for each component signal, said detection base signal pairs having properties analogous to said base signal pairs of the transmitted signals, but with counterpart transmitted and detection base signal pairs overlapping in frequency by a band greater in width than any frequency shift attributable to relative movement between the mobile unit and the transmitter, the difference in phase angle at any common frequency being substantially a first constant and a complementary second constant multiplying the frequency,

forming for each received component signal a correlation amplitude function from term-by-term sums of the absolute values of the correlation component function pairs, said absolute values being raised to a like power not less than one and raising said sums to a power greater than zero but less than one, and

identifying from the maxima of the correlation amplitude function individual member signals.

13. A method according to Claim 12, wherein for at least one component signal a single angular coordinate is encoded as a phase distortion which is substantially a third constant and a complementary fourth constant multiplying the frequency, the method comprising the steps of

developing member signals for said component signals and processing said component signals using transmitted and detection base signal pairs, individual base signal pairs having the further property that the phases at all significant frequencies are substantially a fifth constant and a complementary sixth constant multiplying the frequency;

measuring the constant phases of individual member signals in said received and processed component signals;

correcting said measured constant phases for the constant phase values of the base signal pairs;

decoding said angular coordinates from said corrected constant phases; and

forming further corrected signal transit times and interval times for member signals of said component signals by compensating said times for any linear phase elements of the base signal pulses as given by the complementary second constants.

14. A method according to claim 13, characterised in that at least one component signal consists of more than one member signal, and more than one angular coordinate is encoded in said component signal, each phase encoding being substantially a respective third constant and a respective complementary fourth constant multiplying the frequency, so that for at least one said angular coordinate the encoding is distinct for at least one member signal, said encodings being independent and being at least equal in number to the number of member signals and angular coordinates, and said angular coordinates are obtained from said measured phases and said phase encodings.

**Patentansprüche**

1. Verfahren zur Ermittlung der Navigationsinformation für eine mobile Einheit in Form wenigstens einer Winkelkoordinate, bei dem von einem Sender zu einem Empfänger ein zusammengesetztes Signal übertragen wird, wobei Sender oder Empfänger auf der mobilen Einheit und entsprechend Empfänger oder Sender auf einer festen Einheit angeordnet sind, wobei das zusammengesetzte Signal aus wenigstens einem Teilsignal besteht, das eine lineare Kombination eines Paares von Grundsignalen $f_0(t)$ und $f_1(t)$ darstellt, welche die folgenden Eigenschaften im Hinblick auf die erforderliche praktische Näherung erfüllen:

(i) $f_0(t)$ und $f_1(t)$ sind Teil eines gemeinsamen Amplitudenspektrums, das im wesentlichen flach über seine beiden stetigen Frequenzbänder bei positive und negativen Frequenzen und darüber hinaus im wesentlichen gleich 0 ist;

(ii) es gibt ein endliches Zeitintervall mit der Dauer α, vor und nach welchem $f_0(t)$ und $f_1(t)$ als gleich 0 angesehen werden,

(iii) $f_0(t)$ und $f_1(t)$ sind um 90° phasenverschoben, und

(iv) $f_0(t)$ und $f_1(t)$ sind in eine ungerade Funktion bzw. gerade Funktion bei $t=0$, der als der zentrale Koordinatenwert in ihrem Intervall der Definition der Dauer α definiert ist, durch eine konstante Phasenverschiebung für alle Frequenzen transformierbar sind, wobei das oder jedes Teilsignal phasenkodiert wird mit einem Unterschied in der Phase gegenüber wenigstens der einen Winkelkoordinate,

bei dem das zusammengesetzte Signal am Empfänger zusammengesetzt wird,

bei dem die Phase des empfangenen Signals gemessen wird, und

bei dem wenigstens die eine Winkelkoordinate aus der gemessenen Phase dekodiert wird.

2. Verfahren nach Anspruch 1, bei dem mehrere Winkelkoordinaten in eine entsprechende Vielzahl von Teilsignalen kodiert wird.

3. Verfahren nach Anspruch 1, bei dem das übertragene Signal ein zusammengesetztes Signal darstellt, das aus einer Vielzahl der Teilsignal besteht.

4. Verfahren nach Anspruch 3, bei dem das Teilsignal in einem Medium bekannter Fortpflanzungsgeschwindigkeit übertragen wird, und bei dem weiterhin die Navigationsinformation in Form der Relativegeschwindigkeit zwischen dem Sender und Empfänger erfaßt wird, bei dem Zeitabstände zwischen Teilsignalen gemessen werden, deren Zeitabstand anfänglich bekannt ist, korrigierte Zeitabstände durch Kompensation jeder auf diese Weise gebildeten Zeit für jedes lineare Element in dieser Phasenkodierung gebildet wird und die Relativgeschwindigkeit aus den korrigierten Zeitabständen bestimmt wird.

5. Verfahren nach Anspruch 3 oder 4, bei dem das Teilsignal in einem Medium bekannter Fortpflanzungsgeschwindigkeit übertragen wird und bei dem eine Navigationsinformation in Form des Radialbereiches zwischen dem Sender und Empfänger festgestellt bzw. erfaßt wird, bei dem weiterhin die Signal-Laufzeiten von Teilsignalen, die eine bekannte Anfangszeit haben, gemessen wird, korrigierte gemessene Signallaufzeiten durch Kompensation jeder so gebildeten Zeit für jedes lineare Element der Phasenkodierung gebildet werden, der Radialbereich aus den korrigierten Signallaufzeiten erzeugt wird und der Radialbereich für jede bekannte Relativgeschwindigkeitskomponente korrigiert wird.

6. Verfahren nach einem der vorangehenden Ansprüche, bei dem eine durch Eigenschaften des signalleitenden Mediums erzeugte Phasenverzerrung in jedem Teilsignal vorliegt, die durch das Medium hervorgerufene Phasenverzerrung unabhängig von allen anderen Phasenkodierungen ist, die Zahl der unabhängigen Kodierungen gegenüber der Zahl der Winkelkoordinaten um wenigstens 1 höher ist und die durch das Medium eingeführten Phasenverzerrungen durch die gemessenen Phasen und die bekannten Phasenkodierungen erhalten werden.

7. Verfahren nach einem der vorangehenden Ansprüche, bei dem für wenigstens eine mobile Einheit, die ihre Position durch die Navigationsinformation festgelegt hat, reflektierte Teilsignale anderer mobiler Einheiten verwendet werden, um deren Positionen relativ zu der mobilen Einheit mit festgelegter Position festzulegen.

8. Verfahren nach einem der vorangehenden Ansprüche, bei dem Phasen aus den identifizierten Teilsignal-Phasenspektren gemessen werden.

9. Verfahren nach einem der vorangehenden Ansprüche, bei dem wenigstens die eine Winkelkoordinate als Phasenverzerrung kodiert ist, die durch Fortpflanzung des übertragenen zusammengesetzten Signals durch ein Medium mit Stereueigenschaften hervorgerufen wird, wobei sich die Streueigenschaften im Verhältnis zu wenigstens der einen Winkelkoordinate ändern.

10. Verfahren nach einem der Ansprüche 1 bis 8, bei dem wenigstens die eine Winkelkoordinate als Phasenverzerrung kodiert ist, die durch Reflektieren des übertragenen zusammengesetzten Signals von einer Oberfläche hervorgerufen wird, welche neben dem kritischen Winkel im Verhältnis zu wenigstens der einen Winkelkoordinate positioniert ist.

11. Verfahren nach einem der vorangehenden Ansprüche, bei dem eine Vielzahl von zusammengesetzten Signalen übertragen wird, wobei die zusammengesetzten Signale voneinander getrennt werden können.

12. Verfahren nach Anspruch 11, bei dem jedes zusammengesetzte Signal einen definierten Polarisationscharakter hat, die zusammengesetzten Signale voneinander unterscheidbar sind durch eine Kombination des Polarisationscharakters, Frequenzgehaltes und Teilsignalgehaltes, bei dem folgende Schritte durchgeführt werden:

Trennung der empfangenen zusammengesetzten Signale und Erzeugung von Nachbildungen zur Verarbeitung,

Verarbeitung der Nachbildungen durch Querkorrelation mit der Erfassung von Grundsignalpaaren, wodurch ein Paar von Korrelationsfunktionen für jedes zusammengesetzte Signal erzeugt wird, wobei die erfaßten Grundsignalpaare Eigenschaften analog zu den Grundsignalpaaren der übertragenen Signale haben, wobei jedoch das Gegenstück übertragen wird und die erfaßten Grundsignalpaare sich bezüglich der Frequenz durch ein Band überlappen, das größere Breite hat als jede Frequenzverschiebung, die sich aufgrund der Relativbewegung zwischen der mobilen Einheit und dem Sender ergibt, wobei die Phasenwinkeldifferenz bei jeder üblichen Frequenz im wesentlichen eine erste Konstante und eine komplementäre zweite Konstante darstellen, welche die Frequenz vervielfachen,

bei dem für jedes empfangene zusammengesetzte Signal eine Korrelationsamplitudenfunktion durch termweise Summierung der Absolutwerte der Korrelationskomponenten-Funktionspaare gebildet wird, die Absolutwerte angehoben werden auf eine ähnliche Potenz von nicht weniger als 1, und die Summen auf eine Potenz größer als 0, jedoch kleiner als 1, und

aus den Maxima der Korrelationsamplitudenfunktion individuelle Teilsignale identifiziert werden.

13. Verfahren nach Anspruch 12, bei dem für wenigstens ein zusammengesetztes Signal eine einzige Winkelkoordinate als Phasenverzerrung kodiert ist, die im wesentlichen eine dritte Konstante und eine komplementäre vierte Konstante darstellt, welche die Frequenz vervielfacht, bei dem folgende Verfahrensschritte enthalten sind:

Entwicklung von Teilsignalen für die zusammengesetzten Signale und Verarbeitung der zusammengesetzten Signale, wobei die übertragenen und erfaßten Grundsignalpaare benutzt werden, wobei individuelle Grundsignalpaare die weitere Eigenschaft besitzten, daß die Phasen bei allen signifikanten Frequenzen im wesentlichen eine fünfte Konstante und eine komplementäre sechste Konstante darstellen, welche die Frequenz vervielfachen,

die konstanten Phasen der einzelnen Teilsignale in den empfangenen und verarbeiteten zusammengesetzten Signalen gemessen werden,

die gemessenen konstanten Phasen für die konstanten Phasenwerte der Grundsignalpaare korrigiert werden, die Winkelkoordinaten aus den korrigierten konstanten Phasen dekodiert werden, und

weiter korrigierte Signallaufzeiten und Zeitabstände für die Teilsignale der zusammengesetzten Signale durch Kompensation der Zeiten für jedes lineare Phasenelement der Basissignalimpulse gebildet werden, wie sie durch die komplementären Zweitkonstanten gegeben sind.

14. Verfahren nach Anspruch 13, dadurch gekennzeichnet, daß wenigstens ein zusammengesetztes Signal aus mehr als einem Teilsignal besteht und mehr als eine Winkelkoordinate in das zusammengesetzte Signal kodiert ist, jede Phasenkodierung im wesentlichen eine zugehörige dritte Konstante und eine zugehörige komplementäre vierte Konstante, welche die Frequenz vervielfachen, darstellt, so daß für wenigstens die eine Winkelkoordinate die Kodierung unterschiedlich ist für wenigstens ein Teilsignal, wobei die Kodierungen unabhängig sind und hinsichtlich der Zahl wenigstens gleich der Zahl der Teilsignale und Winkelkoordinaten sind, und bei dem die Winkelkoordinaten aus den gemessenen Phasen und den Phasenkodierungen erhalten werden.

**Revendications**

1. Procédé de détermination pour un mobile d'informations de navigation selon au moins une coordonnée angulaire, comprenant les étapes suivantes:

émettre à partir d'un émetteur vers un récepteur dont l'un est situé sur le mobile et dont l'autre est situé dans une station fixe, un signal composant qui comprend au moins un signal constituant qui est une combinaison linéaire d'une paire de signaux de base $f_0(t)$ et $f_1(t)$ qui satisfont les propriétés suivantes dans le cadre des approximations pratiques requises:

(i) $f_0(t)$ et $f_1(t)$ partagent un spectre d'amplitude commun qui est sensiblement plat sur ses bandes continues aux fréquences positives et négatives et sensiblement nul ailleurs;

(ii) il existe un intervalle de temps fini de durée avant et après lequel $f_0(t)$ et $f_1(t)$ peuvent être considérés comme nuls;

(iii) $f_0(t)$ et $f_1(t)$ sont en quadrature; et

(iv) $f_0(t)$ et $f_1(t)$ sont transformables en fonctions impaires et paires, respectivement par rapport à $t=0$, cette valeur étant définie comme la valeur de coordonnée centrale dans leur intervalle de définition de durée $\alpha$, par un déphasage constant appliqué à toutes les fréquences, le ou chaque signal constituant étant codé en phase avec une distinction de phase par rapport à ladite au moins une coordonnée angulaire;

recevoir le signal composant au niveau du récepteur;

mesurer la phase du signal reçu; et

décoder ladite au moins une coordonnée angulaire à partir de la phase mesurée.

2. Procédé selon la revendication 1, dans lequel une pluralité de coordonnées angulaires sont codées selon une pluralité correspondante de signaux constituants.

3. Procédé selon la revendication 1, dans lequel le signal émis est un signal composant formé d'une pluralité des signaux constituants.

4. Procédé selon la revendication 3, dans lequel le signal constituant est émis dans un milieu de vitesse de propagation connue et dans lequel d'autres informations de navigation sont déterminées en terme de vitesse relative entre l'émetteur et le récepteur, le procédé comprenant les étapes supplémentaires consistant à: mesurer des intervalles de temps entre signaux constituants dont l'intervalle de temps est initialement connu, former des intervalles de temps corrigés en composant chaque durée ainsi formée pour tout élément linéaire dans les codages de phase, et déterminer la vitesse relative pour les intervalles de temps corrigés.

5. Procédé selon l'une des revendications 3 ou 4 dans lequel le signal constituant est émis dans un milieu de vitesse de propagation connue et dans lequel d'autres informations de navigation sont déterminées en fonction de la plage radiale entre l'émetteur et le récepteur, le procédé comprenant les étapes supplémentaires consistant à: mesurer des durées de transition de signaux pour les signaux consituants ayant une durée d'initialisation connue, former des durées de transition de signaux mesurés corrigés en composant chaque durée ainsi formée pour tous éléments linéaires dans les codages de phase, produire ladite plage radiale à partir des durées de transition des signaux corrigés, et corriger la gamme radiale pour toute composante de vitesse relative connue.

6. Procédé selon l'une quelconque des revendications précédentes dans lequel une distortion de phase produite par les propriétés du milieu de propagation de signal est présente dans chaque signal constituant, la distortion de phase du milieu étant indépendante de tous les autres codage de phase, le nombre de codages indépendants étant au moins égal à un de plus que le nombre de coordonnées angulaires, et les distortions de phase du milieu sont obtenues à partir des phases mesurées et des codages de phase connus.

7. Procédé selon l'une quelconque des revendications précédentes dans lequel, pour au moins un mobile qui a établi sa position à partir des informations de navigation, des signaux constituants réfléchis en provenance d'autres mobiles sont utilisés pour établir leur position par rapport au mobile de position établie.

8. Procédé selon l'une quelconque des revendications précédentes, dans lequel les phases sont mesurées à partir des spectres de phase des signaux constituants identifiés.

9. Procédé selon l'une quelconque des revendications précédentes, dans lequel ladite au moins une coordonnée angulaire est codée en tant que distorsion de phase introduite en faisant se propager le signal composant émis à travers un milieu ayant des propriétés dispersives qui varient en fonction de ladite au moins une coordonnée angulaire.

10. Procédé selon l'une quelconque des revendications 1 à 8, dans lequel ladite au moins une coordonnée angulaire est codée sous forme d'une distorsion de phase introduite en réfléchissant le signal composant émis à partir d'une surface positionnée au delà de l'angle critique par rapport à ladite au moins une coordonnée angulaire.

11. Procédé selon l'une quelconque des revendications précédentes dans lequel une pluralité des signaux composants est émise, les signaux composants étant séparables les uns des autres.

12. Procédé selon la revendication 11, dans lequel chaque signal composant présente un caractère de polarisation défini, les signaux composants étant reconnaissables les uns des autres par une certaine combinaision du caractère de polarisation, du contenu en fréquence et du contenu en signaux constituants, ce procédé comprenant les étapes suivantes:

séparer les signaux composants reçus et en former des duplications pour traitement,

traiter les duplications par intercorrélation avec les paires de signaux de base de détection, produisant ainsi une paire de fonctions composantes de corrélation pour chaque signal composant, les paires de signaux de base de détection ayant des propriétés analogues aux paires de signaux de base des signaux émis, mais avec des contre-parties émises et des paires de signaux de base de détection se recouvrant en fréquence sur une bande plus large que tout décalage de fréquence attribuable au déplacement relatif entre le mobile et l'émetteur, la différence d'angle de phase pour une fréquence commune quelconque étant sensiblement une première constante et une seconde constante complémentaire multipliant la fréquence,

former pour chaque signal composant reçu une fonction d'amplitude de corrélation à partir de sommes terme à terme des valeurs absolues des paires de fonctions composantes, ces valeurs absolues étant élevées à une puissance identique non-inférieure à un et élever lesdites sommes à une puissance supérieure à zéro mais inférieure à 1, et

identifier à partir des maxima de la fonction d'amplitude de corrélation des signaux constituants individuels.

13. Procédé selon la revendication 12, dans lequel pour au moins un signal composant, une coordonnée angulaire unique est codée sous forme d'une distortion de phase qui est sensiblement une troisième constante et une quatrième constante complémentaire multipliant la fréquence, le procédé comprenant les étapes suivantes:

former des signaux constituants pour les signaux composants et traiter des signaux com-

posants en utilisant les paires de signaux de base émis et de détection, les paires de signaux de base individuels ayant la propriété supplémentaire selon laquelle les phases de toutes les fréquences significatives sont sensiblement une cinquième constante et une sixième constante complémentaire multipliant la fréquence;

mesurer les phases constantes des signaux constituants individuels dans les signaux composants reçus et traités;

corriger les phases constantes mesurées par rapport aux valeurs de phase constante des paires de signaux de base;

décoder les coordonnées angulaires à partir des phases constantes corrigées; et

former d'autres durées de transition et intervalles de temps de signal corrigé pour les signaux constituants des signaux composants en compensant ces durées quant à tous éléments de phase linéaire des impulsions de signal de base telles que fournies par les secondes constantes complémentaires.

14. Procédé selon la revendication 13, caractérisé en ce que au moins un signal composant comprend plus d'un signal constituant et en ce que plus d'une coordonnée angulaire est codée dans le signal composant, chaque codage de phase étant sensiblement une troisième constante respective et une quatrième constante complémentaire respective multipliant la fréquence de sorte que pour au moins l'une desdites coordonnées angulaires le codage est distinct pour au moins un signal constituant, les codages étant indépendants et étant au moins égaux en nombre au nombre de signaux constituants et de coordonnées angulaires, et les coordonnées angulaires sont obtenues

à partir des phases mesurées et des codages de phase.

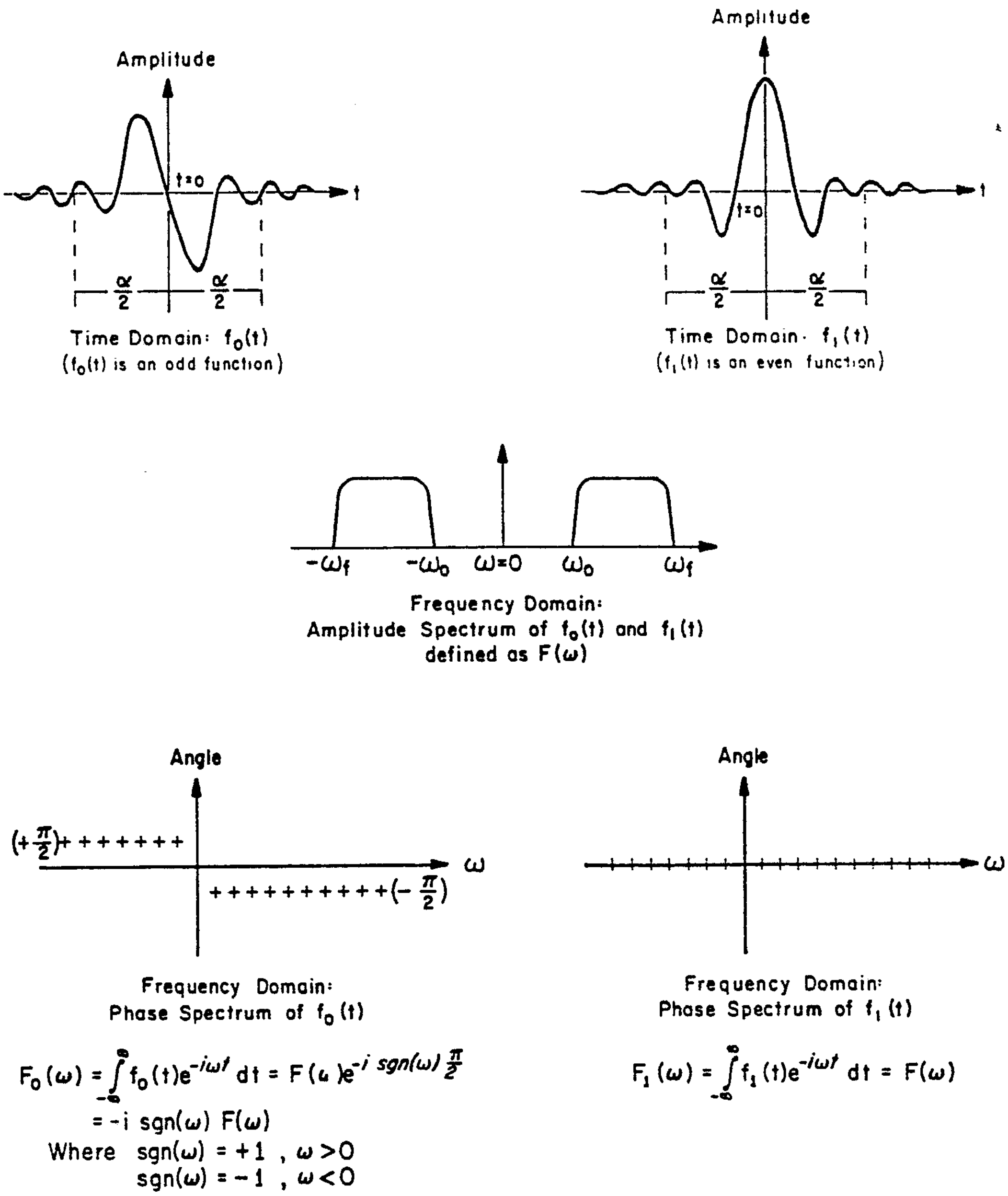


TIME DOMAIN AND COMPLEX FREQUENCY DOMAIN (IN POLAR FORM) REPRESENTATIONS OF THE FUNCTION PAIR $f_0(t)$, $f_1(t)$

FIG. 1

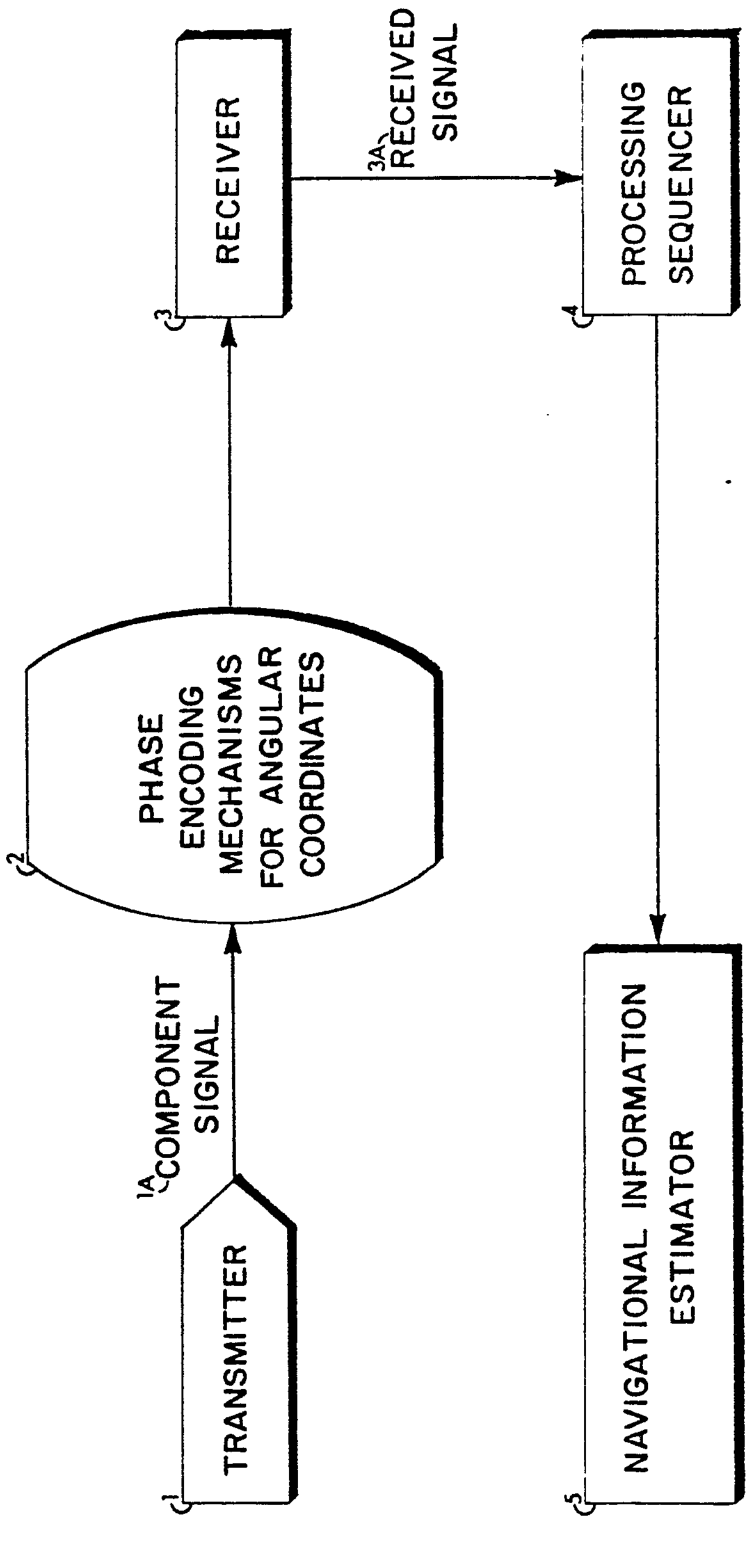
TRANSMITTER
1
1A
COMPONENT SIGNAL
PHASE ENCODING MECHANISMS FOR ANGULAR COORDINATES
2
RECEIVER
3
3A
RECEIVED SIGNAL
PROCESSING SEQUENCER
4
NAVIGATIONAL INFORMATION ESTIMATOR
5

FIG. 2

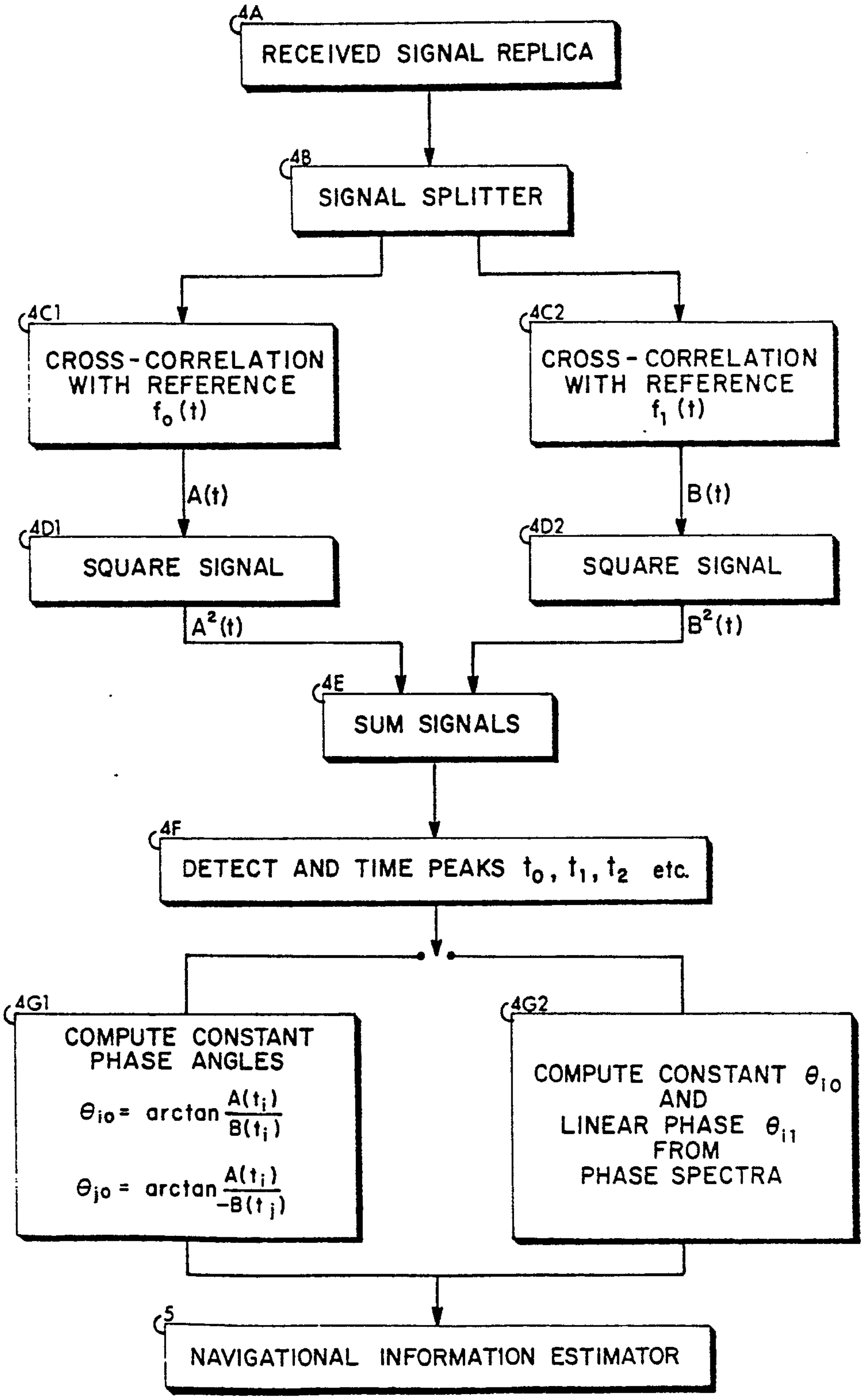
4A
RECEIVED SIGNAL REPLICA
4B
SIGNAL SPLITTER
4C1
CROSS-CORRELATION WITH REFERENCE $f_0(t)$
4C2
CROSS-CORRELATION WITH REFERENCE $f_1(t)$
A(t)
B(t)
4D1
SQUARE SIGNAL
4D2
SQUARE SIGNAL
$A^2(t)$
$B^2(t)$
4E
SUM SIGNALS
4F
DETECT AND TIME PEAKS $t_0, t_1, t_2$ etc.
4G1
COMPUTE CONSTANT PHASE ANGLES
$\theta_{io} = \arctan \frac{A(t_i)}{B(t_i)}$
$\theta_{jo} = \arctan \frac{A(t_j)}{-B(t_j)}$
4G2
COMPUTE CONSTANT $\theta_{io}$ AND LINEAR PHASE $\theta_{i1}$ FROM PHASE SPECTRA
5
NAVIGATIONAL INFORMATION ESTIMATOR

FIG. 3

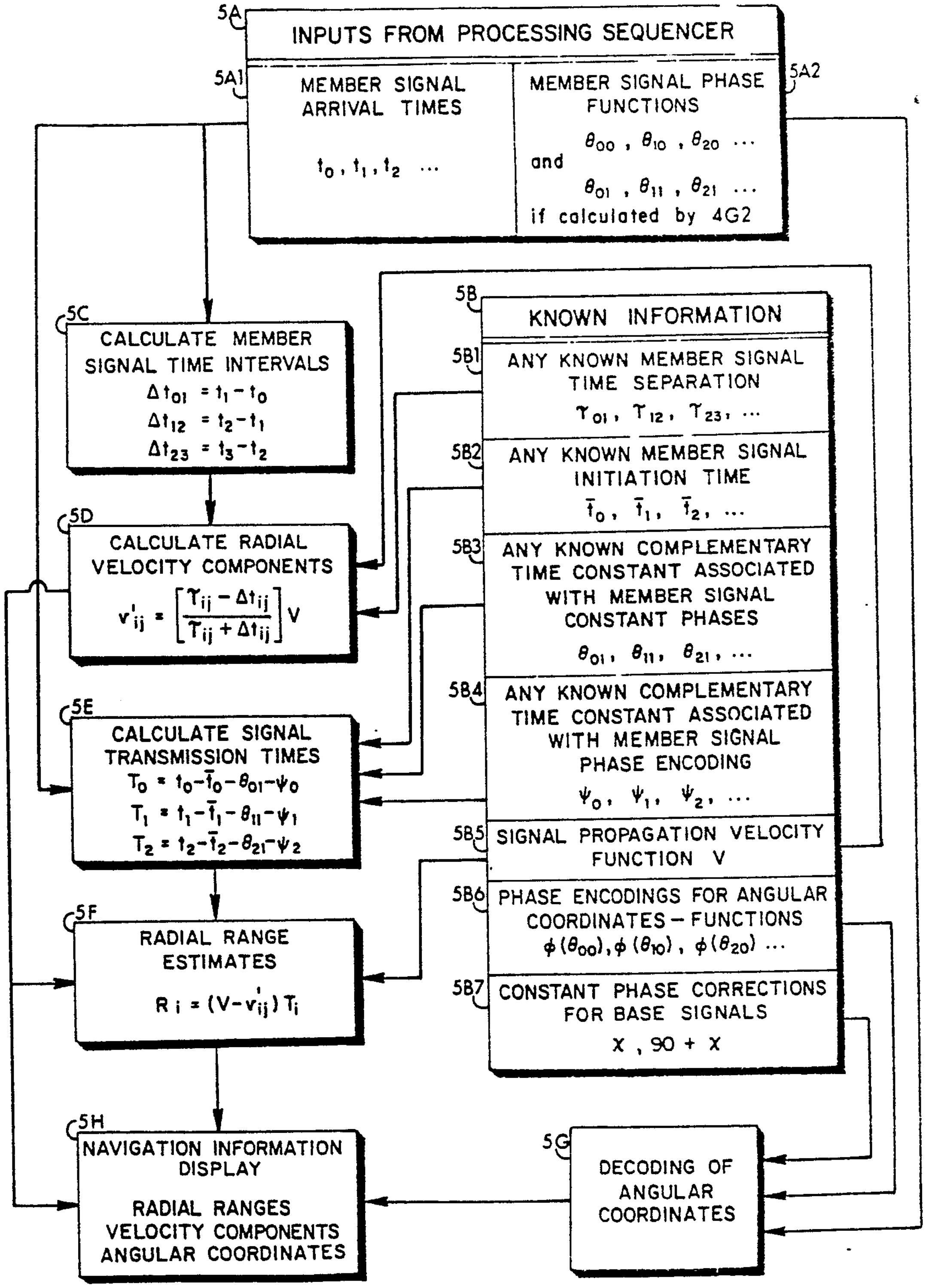
5A
INPUTS FROM PROCESSING SEQUENCER
5A1
MEMBER SIGNAL ARRIVAL TIMES
$t_0, t_1, t_2$ ...
5A2
MEMBER SIGNAL PHASE FUNCTIONS
$\theta_{00}, \theta_{10}, \theta_{20}$ ...
and
$\theta_{01}, \theta_{11}, \theta_{21}$ ...
if calculated by 4G2
5C
CALCULATE MEMBER SIGNAL TIME INTERVALS
$\Delta t_{01} = t_1 - t_0$
$\Delta t_{12} = t_2 - t_1$
$\Delta t_{23} = t_3 - t_2$
5D
CALCULATE RADIAL VELOCITY COMPONENTS
$v'_{ij} = \left[\frac{\Upsilon_{ij} - \Delta t_{ij}}{\Upsilon_{ij} + \Delta t_{ij}}\right] V$
5E
CALCULATE SIGNAL TRANSMISSION TIMES
$T_0 = t_0 - \bar{t}_0 - \theta_{01} - \psi_0$
$T_1 = t_1 - \bar{t}_1 - \theta_{11} - \psi_1$
$T_2 = t_2 - \bar{t}_2 - \theta_{21} - \psi_2$
5F
RADIAL RANGE ESTIMATES
$R_i = (V - v'_{ij}) T_i$
5H
NAVIGATION INFORMATION DISPLAY
RADIAL RANGES
VELOCITY COMPONENTS
ANGULAR COORDINATES
5B
KNOWN INFORMATION
5B1
ANY KNOWN MEMBER SIGNAL TIME SEPARATION
$\Upsilon_{01}, \Upsilon_{12}, \Upsilon_{23}$, ...
5B2
ANY KNOWN MEMBER SIGNAL INITIATION TIME
$\bar{t}_0, \bar{t}_1, \bar{t}_2$, ...
5B3
ANY KNOWN COMPLEMENTARY TIME CONSTANT ASSOCIATED WITH MEMBER SIGNAL CONSTANT PHASES
$\theta_{01}, \theta_{11}, \theta_{21}$, ...
5B4
ANY KNOWN COMPLEMENTARY TIME CONSTANT ASSOCIATED WITH MEMBER SIGNAL PHASE ENCODING
$\psi_0, \psi_1, \psi_2$, ...
5B5
SIGNAL PROPAGATION VELOCITY FUNCTION V
5B6
PHASE ENCODINGS FOR ANGULAR COORDINATES – FUNCTIONS
$\phi(\theta_{00}), \phi(\theta_{10}), \phi(\theta_{20})$ ...
5B7
CONSTANT PHASE CORRECTIONS FOR BASE SIGNALS
X , 90 + X
5G
DECODING OF ANGULAR COORDINATES

FIG. 4

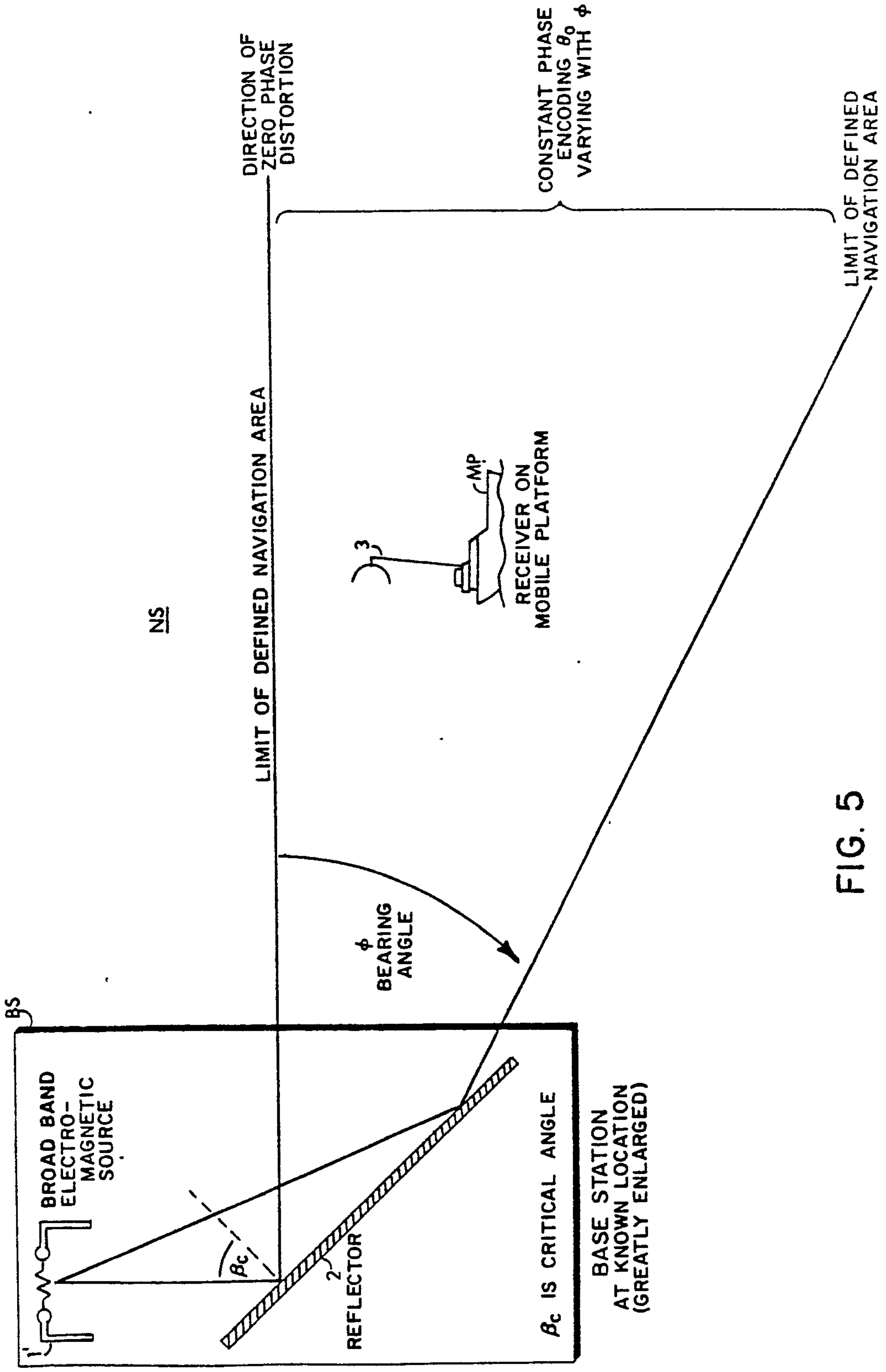
DIRECTION OF ZERO PHASE DISTORTION
CONSTANT PHASE ENCODING $\theta_o$ VARYING WITH $\phi$
LIMIT OF DEFINED NAVIGATION AREA
LIMIT OF DEFINED NAVIGATION AREA
NS
RECEIVER ON MOBILE PLATFORM
3
MP
$\phi$ BEARING ANGLE
BS
BROAD BAND ELECTRO-MAGNETIC SOURCE
1
$\beta_c$
2
REFLECTOR
$\beta_c$ IS CRITICAL ANGLE
BASE STATION AT KNOWN LOCATION (GREATLY ENLARGED)

FIG. 5

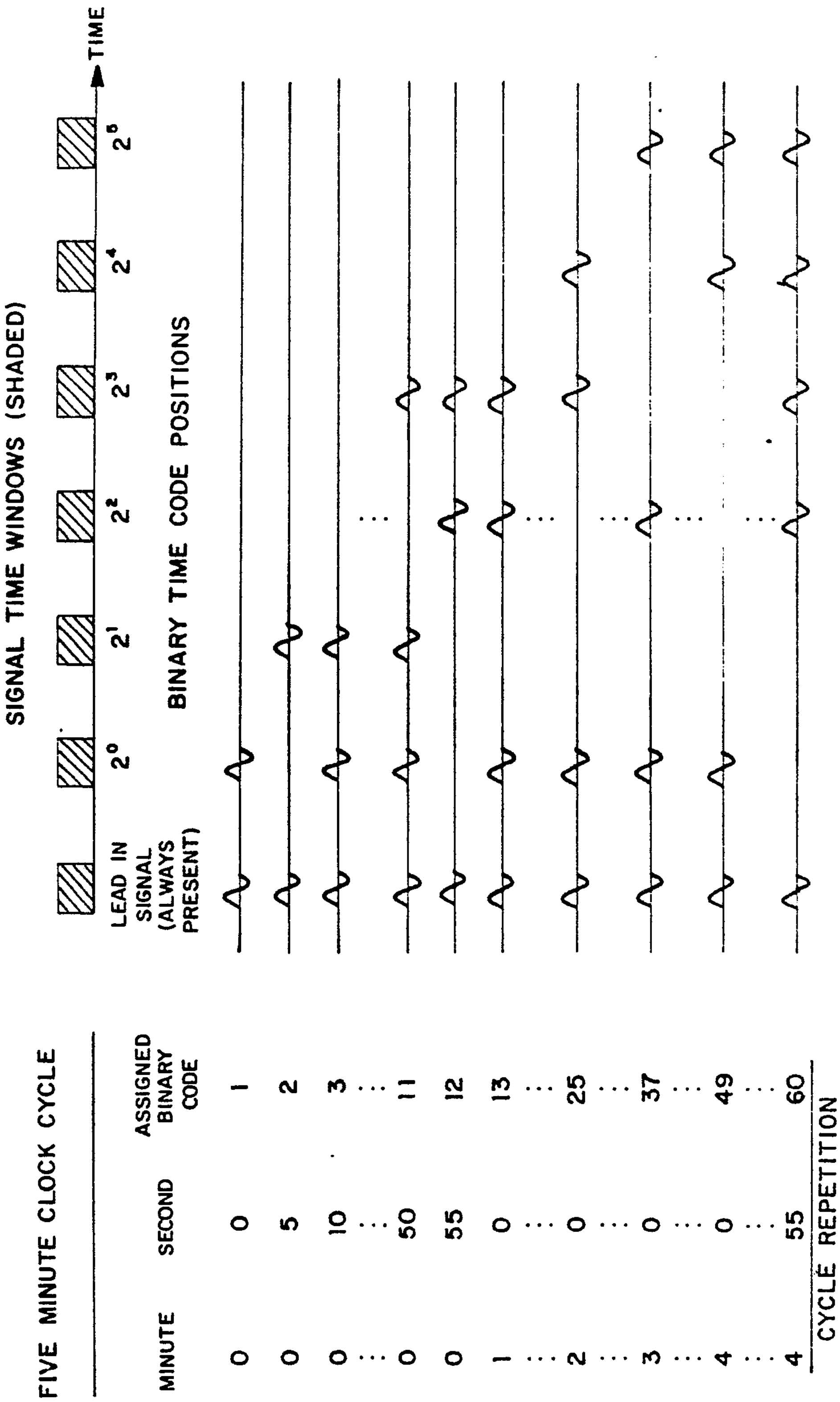
FIVE MINUTE CLOCK CYCLE
MINUTE
SECOND
ASSIGNED BINARY CODE
0 0 1
0 5 2
0 10 3
0 50 11
0 55 12
1 0 13
2 0 25
3 0 37
4 0 49
4 55 60
CYCLE REPETITION
SIGNAL TIME WINDOWS (SHADED)
LEAD IN SIGNAL (ALWAYS PRESENT)
$2^0$
$2^1$
$2^2$
$2^3$
$2^4$
$2^5$
TIME
BINARY TIME CODE POSITIONS

FIG. 6

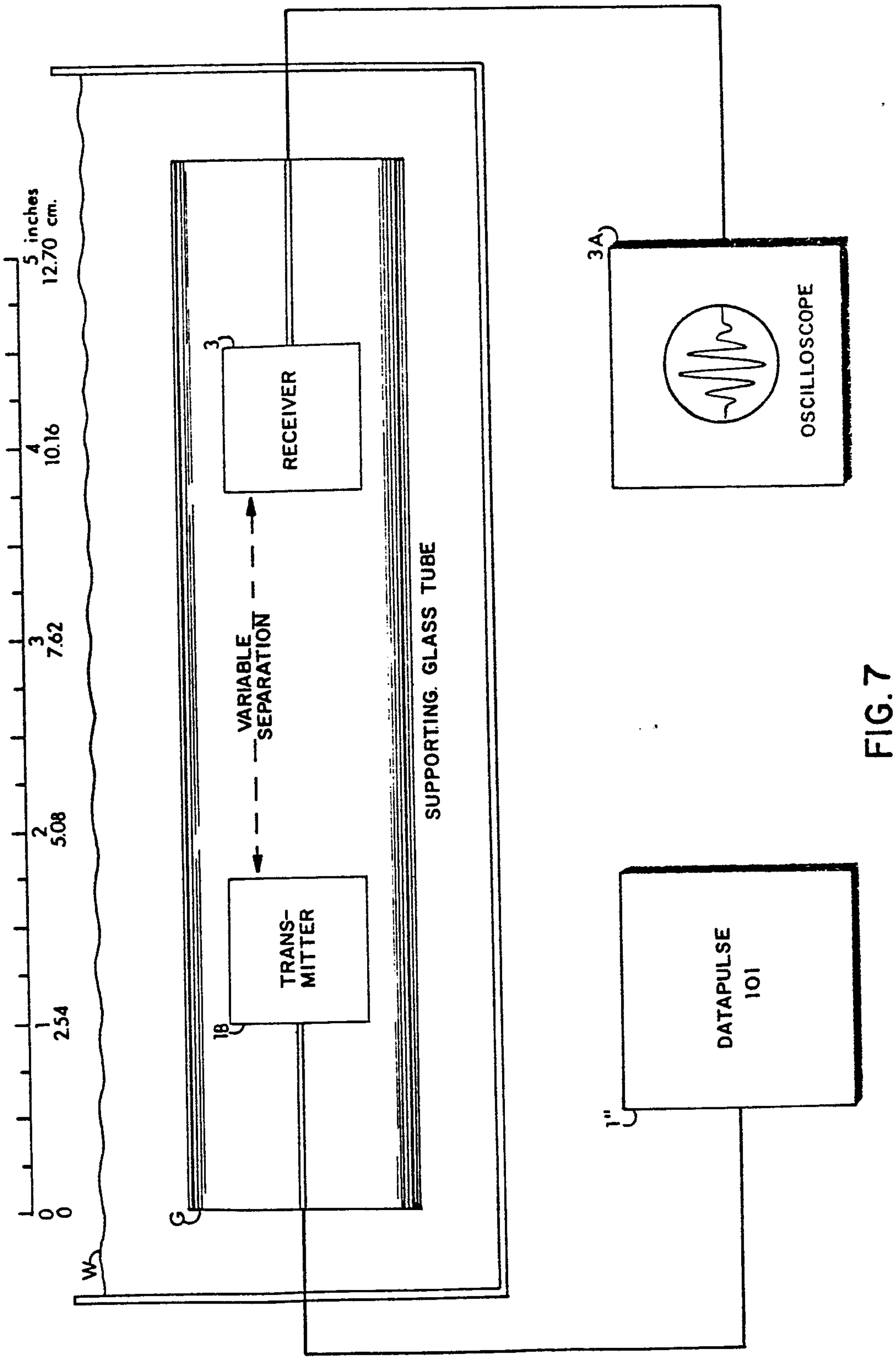
5 inches
12.70 cm.
4
10.16
3
7.62
2
5.08
1
2.54
0
0
W
G
3
RECEIVER
VARIABLE SEPARATION
TRANS-MITTER
1B
SUPPORTING GLASS TUBE
3A
OSCILLOSCOPE
DATAPULSE 101
1"

FIG. 7

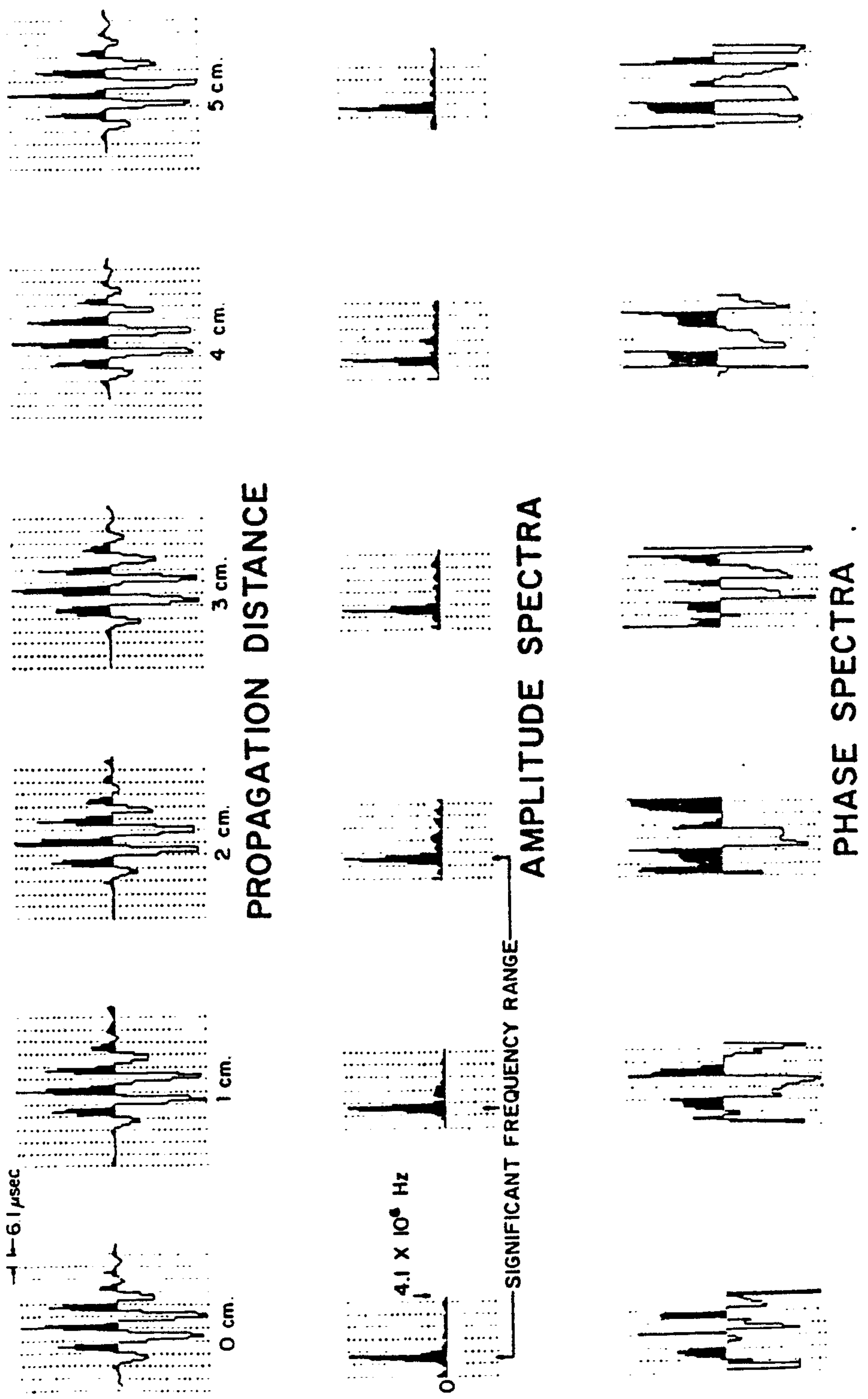
6.1 μsec
0 cm.
1 cm.
2 cm.
3 cm.
4 cm.
5 cm.
PROPAGATION DISTANCE
4.1 X 10⁶ Hz
0
SIGNIFICANT FREQUENCY RANGE
AMPLITUDE SPECTRA
PHASE SPECTRA

FIG. 8

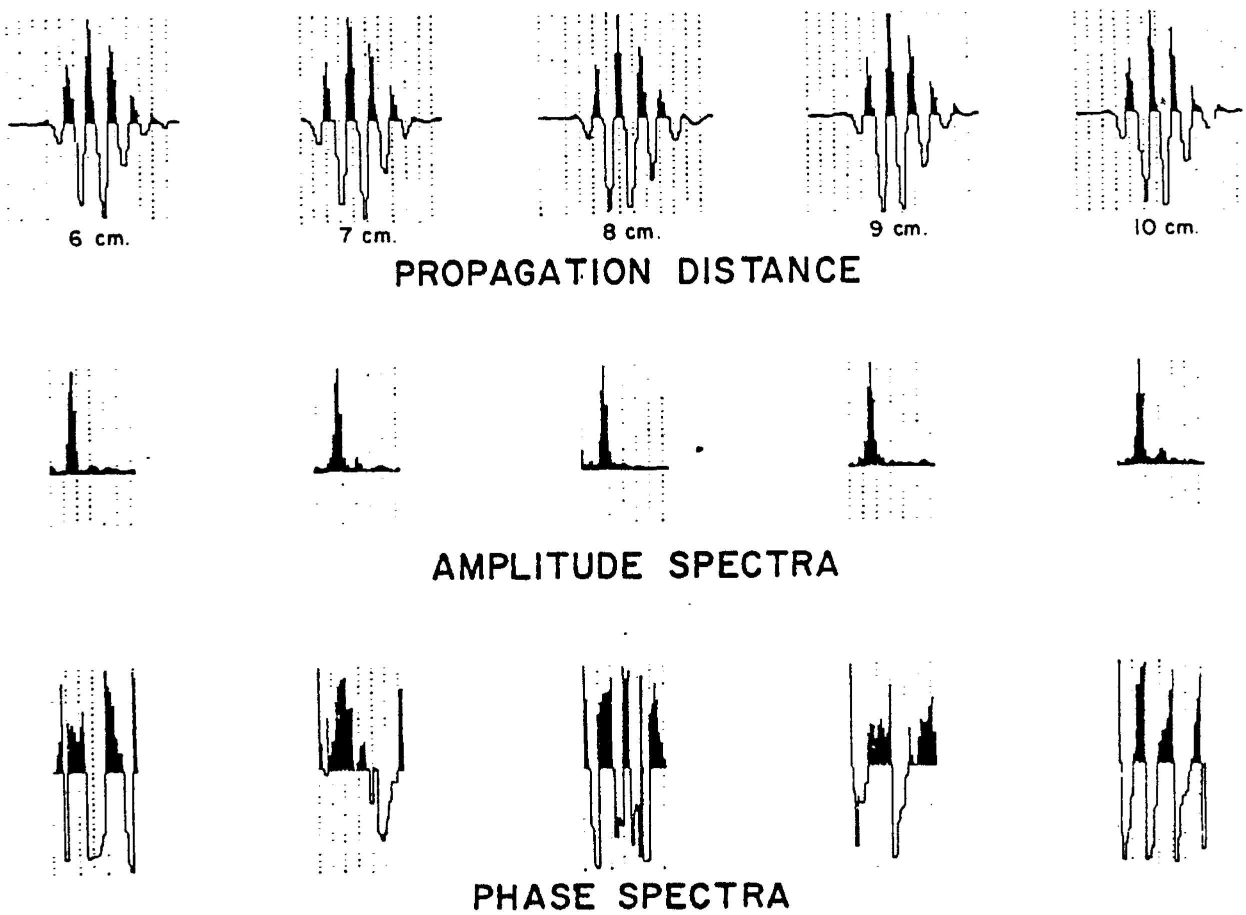
6 cm.
7 cm.
8 cm.
9 cm.
10 cm.
PROPAGATION DISTANCE
AMPLITUDE SPECTRA
PHASE SPECTRA

FIG. 8a

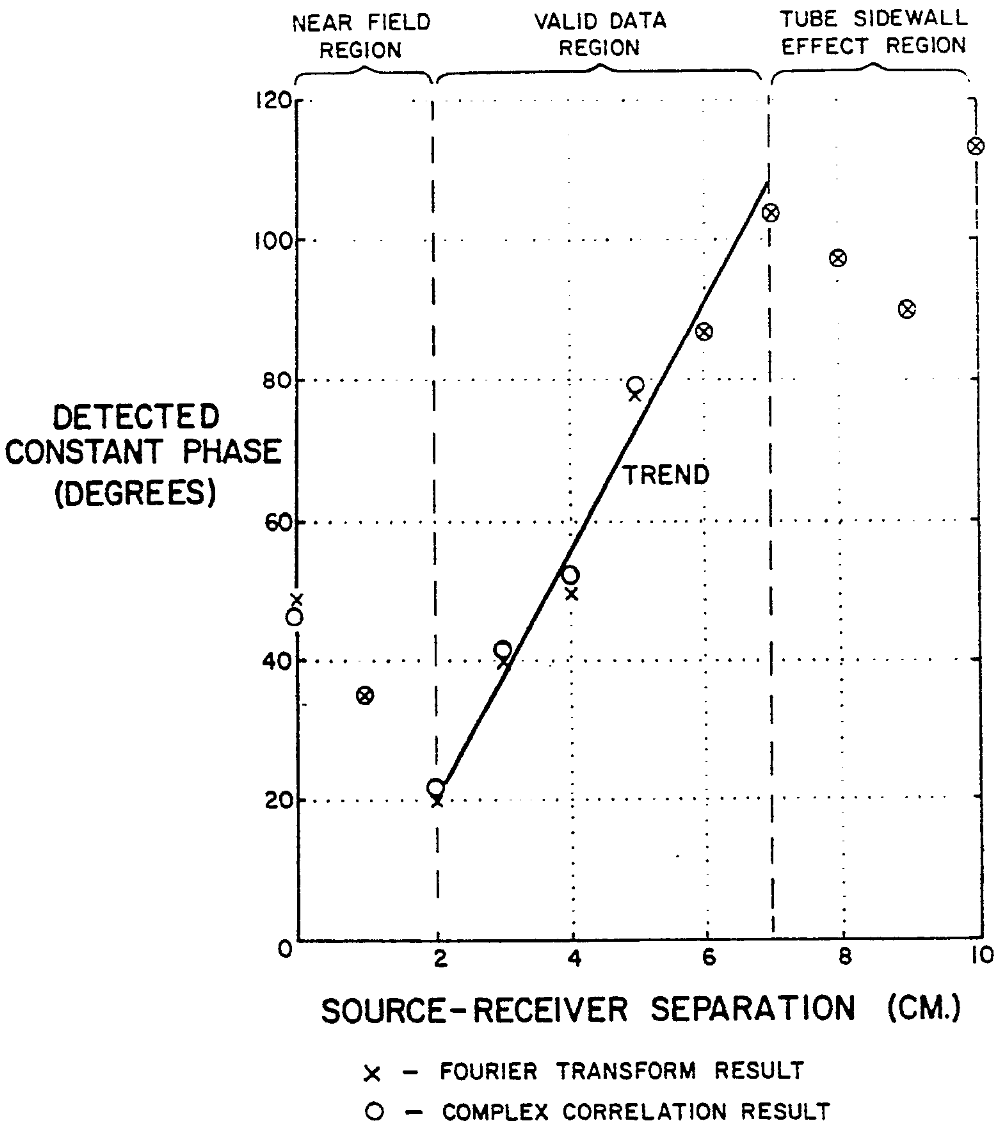
NEAR FIELD REGION
VALID DATA REGION
TUBE SIDEWALL EFFECT REGION
DETECTED CONSTANT PHASE (DEGREES)
120
100
80
60
40
20
0
TREND
2
4
6
8
10
SOURCE-RECEIVER SEPARATION (CM.)
× – FOURIER TRANSFORM RESULT
O – COMPLEX CORRELATION RESULT

FIG. 9